# EUROPEAN PATENT APPLICATION

(11) **EP 4 840 531 A1**
(43) Date of publication of application: **18.11.2026**
(21) Application number: 26167278.6
(22) Date of filing: 24.03.2026
(51) Int. Cl.: B01D 53/56, B01D 53/34, B01D 53/66, B01D 53/78, B01D 53/79, B01F 23/231, B01F 23/233, B29B 7/74

(54) **SYSTEM FOR REMOVING HARMFUL WASTE GASES AND BUBBLE GENERATING DEVICE**

(30) Priority: 14.05.2025 TW 114117987
(71) Applicant: Rayzher Industrial Co., Ltd., Zhubei City, Hsinchu 302054 (TW); National Taipei University of Technology, Taipei 10608 (TW)
(72) Inventor: WU, Kuen-Yi, 302054 Zhubei City, Hsinchu County (TW); CHOU, Ku-Hua, 302054 Zhubei City, Hsinchu County (TW); HO, Chao-Ching, Taipei City (TW); CHANG, Yuan-Jen, Taipei City (TW); KUO, Chia-Lung, Taichung City (TW)
(74) Representative: Prinz & Partner mbB

(57) **Abstract**

A system (S) for removing harmful waste gases and a bubble generating device (1). The system (S) for removing harmful waste gases includes a bubble generating device (1) and a reaction device (2). The first device body (11) of the bubble generating device (1) has a storage chamber (110) for receiving a medium liquid (E10). The stirring assemblies (131) of the stirring module (13) of the bubble generating device (1) each have a secondary delivery channel (1310) and multiple first openings (1311). The main delivery channel (1300) of the main assembly (130) of the stirring module (13) can supply harmful waste gases to each secondary delivery channel (1310). Each secondary delivery channel (1310) can convert the harmful waste gases into multiple microbubbles through the first openings (1311) and supply them to the storage chamber (110), so that the microbubbles mix with the medium liquid (E10) to form a microbubble liquid (M). The reaction device (2) is used to react the microbubble liquid (M) with an auxiliary liquid (E40) to generate an acidic liquid (22).

## Description

### FIELD OF THE DISCLOSURE

The present invention relates to a system for removing harmful waste gases and a bubble generating device, and more particularly to a system structure and a bubble generating device thereof for effectively removing harmful gases using bubble generating technology and chemical reaction technology.

### BACKGROUND OF THE DISCLOSURE

The reaction gases generated during semiconductor manufacturing typically contain flammable, corrosive, or highly toxic harmful gases, all of which must be converted into harmless or treatable substances before being discharged.

Currently, methods for treating harmful gases (such as nitrogen oxides) include catalytic reduction, catalyst-free reduction, and electron beam methods. However, these methods are still limited by certain conditions. For example, the catalytic reduction requires an operating temperature of 250°C to 400°C, but prolonged processing will lead to problems such as catalyst aging and contamination, low removal rates per unit time, and high energy consumption.

### SUMMARY OF THE DISCLOSURE

In response to the above-referenced technical inadequacy, the present invention provides a system and a bubble generating device for removing harmful waste gases, thereby solving the problem of NOx generation during high-temperature combustion.

In order to solve the above-mentioned problems, one of the technical aspects adopted by the present invention is to provide a system for removing harmful waste gas, which includes a bubble generating device and a reaction device. The bubble generating device includes a first device body, a stirring module and a drive module. The first device body is configured to connect to a first external liquid source, and the first device body has a storage chamber configured for receiving a medium liquid provided by the first external liquid source. The stirring module is suspended in the storage chamber, the stirring module includes a main assembly and a plurality of stirring assemblies connected to the main assembly, the main assembly has a main delivery channel, one end of the main assembly is detachably connected to a first external gas source, each stirring assembly has a secondary delivery channel and a plurality of first openings passing therethrough, each secondary delivery channel is communicated with the main delivery channel and the corresponding first openings, the main delivery channel is configured to receive a first harmful waste gas supplied by the first external gas source and supply the first harmful waste gas to the secondary delivery channels, and each of the secondary delivery channels is configured to convert the first harmful waste gas into a plurality of first microbubbles through the first openings and supply the first microbubbles to the storage chamber, so that the first microbubbles mix with the medium liquid to form a microbubble liquid. The drive module is movably connected to the main assembly, and the drive module is configured to drive the main assembly to rotate. The reaction device is connected to the first device body, the reaction device has a reaction chamber configured to store an auxiliary liquid, and the reaction device is configured to receive the microbubble liquid, so that the microbubble liquid reacts with the auxiliary liquid to generate an acidic liquid.

In order to solve the above-mentioned problems, another one of the technical aspects adopted by the present invention is to provide a system for removing harmful waste gas, which includes a bubble generating device and an irradiation module. The bubble generating device includes a first device body, a stirring module and a drive module. The first device body is configured to connect to a first external liquid source, and the first device body has a storage chamber configured for receiving a medium liquid provided by the first external liquid source. The stirring module is suspended in the storage chamber, the stirring module includes a main assembly and a plurality of stirring assemblies connected to the main assembly, the main assembly has a main delivery channel, one end of the main assembly is detachably connected to a first external gas source, each stirring assembly has a secondary delivery channel and a plurality of first openings passing therethrough, each secondary delivery channel is communicated with the main delivery channel and the corresponding first openings, the main delivery channel is configured to receive a first harmful waste gas supplied by the first external gas source and supply the first harmful waste gas to the secondary delivery channels, and each of the secondary delivery channels is configured to convert the first harmful waste gas into a plurality of first microbubbles through the first openings and supply the first microbubbles to the storage chamber, so that the first microbubbles mix with the medium liquid to form a microbubble liquid. The drive module is movably connected to the main assembly, and the drive module is configured to drive the main assembly to rotate. The irradiation module is adjacent to the first device body, and the irradiation module is configured to project a special light beam toward the first device body.

In order to solve the above-mentioned problems, yet another one of the technical aspects adopted by the present invention is to provide a bubble generating device, which includes a first device body, a stirring module and a drive module. The first device body is configured to connect to a first external liquid source, and the first device body has a storage chamber configured for receiving a medium liquid provided by the first external liquid source. The stirring module is suspended in the storage chamber, the stirring module includes a main assembly and a plurality of stirring assemblies connected to the main assembly, the main assembly has a main delivery channel, one end of the main assembly is detachably connected to a first external gas source, each stirring assembly has a secondary delivery channel and a plurality of first openings passing therethrough, each secondary delivery channel is communicated with the main delivery channel and the corresponding first openings, the main delivery channel is configured to receive a first harmful waste gas supplied by the first external gas source and supply the first harmful waste gas to the secondary delivery channels, and each of the secondary delivery channels is configured to convert the first harmful waste gas into a plurality of first microbubbles through the first openings and supply the first microbubbles to the storage chamber, so that the first microbubbles mix with the medium liquid to form a microbubble liquid. The drive module is movably connected to the main assembly, and the drive module is configured to drive the main assembly to rotate.

One of the beneficial effects of the present invention is that the system for removing harmful waste gases and the bubble generating device provided by the present invention can effectively remove harmful gases from the reaction gases generated in industrial processes through the above-described technical solution (by increasing the reaction surface area through microbubbles). Furthermore, the reaction can be carried out in the liquid phase, so that there is no need to use a catalyst to carry out the reaction at high temperatures to save energy.

These and other aspects of the present invention will become apparent from the following description of the embodiment taken in conjunction with the following drawings and their captions, although variations and modifications therein may be effected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a schematic view of the first architecture of the system for removing harmful waste gases according to the first embodiment of the present invention;
FIG. 2 is a partial cross-sectional schematic view of the bubble generating device according to the first embodiment of the present invention;
FIG. 3 is a schematic view of the stirring assembly according to the first embodiment of the present invention;
FIG. 4 is a schematic view of the reaction device according to the first embodiment of the present invention;
FIG. 5 is a schematic view of the second architecture of the system for removing harmful waste gases according to the first embodiment of the present invention;
FIG. 6 is a schematic view of the third architecture of the system for removing harmful waste gases according to the first embodiment of the present invention;
FIG. 7 is a schematic view of the reaction device according to a second embodiment of the present invention; and
FIG. 8 is a schematic view of the system for removing harmful waste gases according to a third embodiment of the present invention.

### DETAILED DESCRIPTION OF THE EXEMPLARY EMBODIMENTS

The present invention is more particularly described in the following embodiments and examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like. It should be noted that the examples described below are merely one feasible embodiment and are not intended to limit the scope of the present invention.

### [First Embodiment]

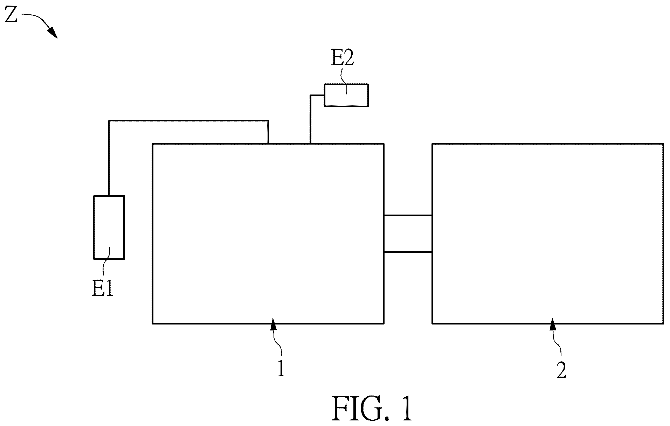

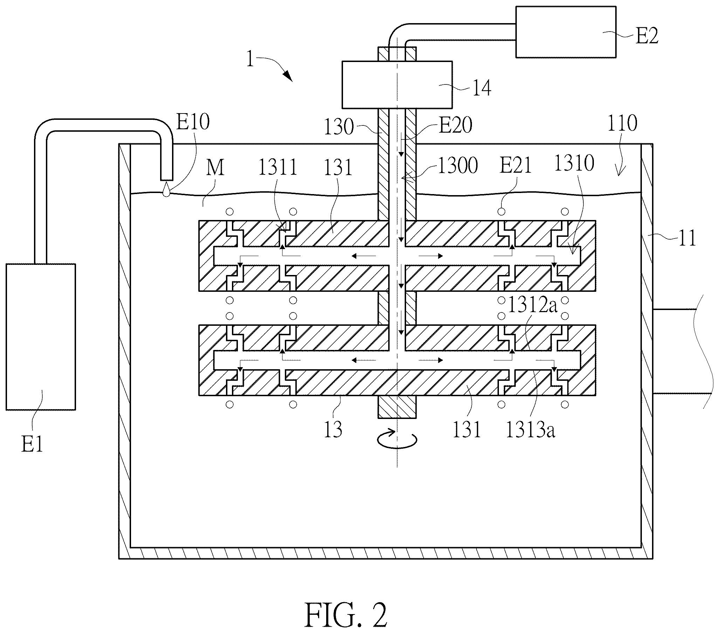

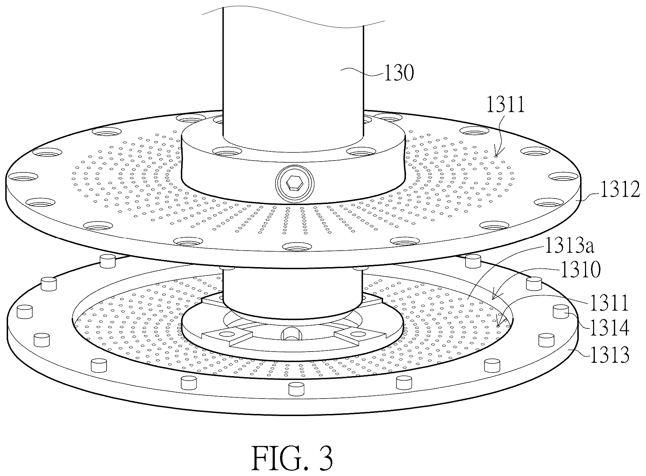

Referring to FIG. 1 to FIG. 5, a first embodiment of the present invention provides a system Z for removing harmful waste gases (or harmful exhaust gas, or hazardous waste gas), which includes a bubble generating device 1 and a reaction device 2.

As shown in FIG. 1 to FIG. 3, the bubble generating device 1 may include a first device body 11, a stirring module 13 (or an agitating module), and a drive module 14. For example, the first device body 11 may be a hollow structure and can be configured to connect to a first external liquid source E1 (such as a first liquid supply module). The first device body 11 may have a storage chamber 110, which can be configured to receive or store a medium liquid E10 (or liquid medium) provided by the first external liquid source E1. The storage chamber 110 is preferably a closed cavity, but the present invention is not limited thereto. The first external liquid source E1 may be a general liquid supply device, and the liquid may be water, but the present invention is not limited thereto.

The stirring module 13 can be suspended or disposed in the storage chamber 110. The stirring module 13 may include a main assembly 130 and a plurality of stirring assemblies 131 (or agitation components). The main assembly 130 may be a hollow structure and have a main delivery channel 1300. One end of the main assembly 130 may be detachably connected to a first external gas source E2 (such as a first gas supply module). The main assembly 130 can be configured to receive a first harmful waste gas E20 provided by the first external gas source E2. The first external gas source E2 may be any type of semiconductor process equipment, any type of industrial process equipment, gas combustion equipment, or gas supply equipment. The first harmful waste gases E20 may be a harmful gas containing nitrogen oxides (NOx), nitric oxide (NO), or a mixture thereof, but the present invention is not limited thereto. The stirring assemblies 131 can be disposed on the main assembly 130. Each stirring assembly 131 may have a secondary delivery channel 1310 and a plurality of first openings 1311 passing through the main body of the stirring assembly 131. Each secondary delivery channel 1310 can be communicated with the main delivery channel 1300 and the corresponding first openings 1311. The main delivery channel 1300 can be configured to supply the first harmful waste gases E20 to each secondary delivery channel 1310. Each secondary delivery channel 1310 can be configured to convert the first harmful waste gases E20 into a plurality of first microbubbles E21 and supply the first microbubbles E21 to the storage chamber 110 through the first openings 1311, so that the first microbubbles E21 can mix with the medium liquid E10 to form a microbubble liquid M. The stirring assemblies 131 may be non-parallel to the main assembly 130. Preferably, each stirring assembly 131 can be perpendicular to the main assembly 130, and the cross-section of each first opening 1311 may be tortuous or N-shaped. Furthermore, each stirring assembly 131 may include a first annular element 1312, a second annular element 1313, and a plurality of fixing elements 1314. The first annular element 1312 and the second annular element 1313 may be annular plate structures and have a plurality of first openings 1311 passing through the main body of the first annular element 1312 and the main body of the second annular element 1313. One side of the first annular element 1312 is recessed inward to form a first groove portion 1312a, one side of the second annular element 1313 is recessed inward to form a second groove portion 1313a, and the first groove portion 1312a and the corresponding second groove portion 1313a cooperate with each other to form a secondary delivery channel 1310. The fixing elements 1314 can be connected to the first annular element 1312 and the second annular element 1313 to engage the first annular element 1312 and the second annular element 1313 with each other. For example, the fixing elements 1314 may be locking elements, such as screws, but the present invention is not limited thereto.

The drive module 14 can be disposed on the first device body 11 and movably connected to the main assembly 130. The drive module 14 can be configured to drive the main assembly 130 to rotate, and the drive module 14 may be a drive motor or any type of drive element.

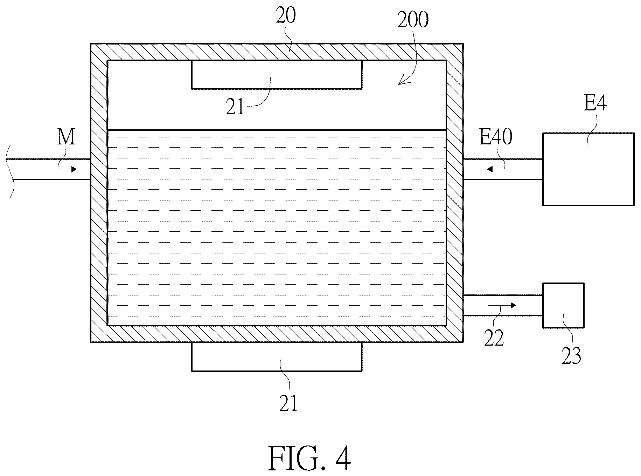

Next, referring to FIG. 1 and FIG. 4, the reaction device 2 can be connected to the first device body 11. The reaction device 2 may have a reaction chamber 200, which can be configured to store an auxiliary liquid E40. The reaction device 2 can be configured to receive the microbubble liquid M, so that the microbubble liquid M can react with the auxiliary liquid E40 to generate an acidic liquid 22. For example, the reaction device 2 may include a second device body 20 and an auxiliary module 21. The second device body 20 may be a hollow structure and connected to the first device body 11. The second device body 20 may have a reaction chamber 200. The second device body 20 can be configured to connect to a second external liquid source E4 (such as a second liquid supply module) and receive the auxiliary liquid E40 provided by the second external liquid source E4. The second device body 20 and the first device body 11 can be connected via a transmission conduit (not shown in the figures). The auxiliary module 21 can be disposed on the second device body 20. The auxiliary module 21 may be a lighting element or a heating element. The second external liquid source E4 may be a special liquid supply device, and the auxiliary liquid E40 may be a liquid containing ozone (O₃), but the present invention is not limited thereto.

Therefore, referring to FIG. 1 to FIG. 4, when the system Z for removing harmful waste gases according to the present invention is operating, the bubble generating device 1 can receive the first harmful waste gases E20 supplied by the first external gas source E2 and the medium liquid E10 provided by the first external liquid source E1.

Next, the drive module 14 can be controlled to drive the main assembly 130 to rotate around its own center, thereby driving the stirring assemblies 131 to stir the medium liquid E10 in the storage chamber 110. Furthermore, the main delivery channel 1300 of the main assembly 130 can be configured to introduce the first harmful waste gases E20 from the first external gas supply source E2. When the main delivery channel 1300 can be configured to receive the first harmful waste gases E20 supplied by the first external gas supply source E2, the main delivery channel 1300 can supply the first harmful waste gases E20 to each secondary delivery channel 1310, so that the first harmful waste gases E20 can be converted into the first microbubbles E21 through the first openings 1311 and then transported to the storage chamber 110.

Therefore, the system Z for removing harmful waste gases according to the present invention can transform or convert the first harmful waste gases E20 into the first microbubbles E21 (which can be micron-sized bubble with a size between 1 µm and 500 µm, nano-sized bubbles with a size between 10 nm and 1000 nm, or ultrafine bubbles) containing nitrogen oxides (NOx) or nitric oxide (NO) by using the stirring module 13, so that the first harmful waste gases E20 can be easily carried by the medium liquid E10 to form a liquid composition (i.e., microbubble liquid M which can be a liquid containing micron bubbles and nano bubbles). Moreover, by continuously stirring the microbubble liquid M in the storage chamber 110 using the stirring assemblies 131, the shear force and the centrifugal force are generated to release the first harmful waste gases E20 (the first microbubble E21) from the first openings 1311. Therefore, the first microbubble E21 in the microbubble liquid M can be homogenized and refined, and the size of the first microbubble E21 in the microbubble liquid M is uniform and refined.

Next, the bubble generating device 1 can be configured to deliver the medium liquid E10 (i.e., microbubble liquid M) carrying the first microbubble E21 to the reaction device 2 via a transmission pipeline (not shown in the figure).

Afterward, when the microbubble liquid M is introduced into the reaction chamber 200, the microbubble liquid M can react with the auxiliary liquid E40 in the reaction chamber 200. Through a special beam of light (e.g., ultraviolet light) projected by the auxiliary module 21, the first microbubble E21 and the auxiliary liquid E40 (e.g., water containing O₃, but not limited thereto) are oxidized to form nitrogen dioxide (NO₂), and the NO₂ can dissolve in the liquid in reaction chamber 200 to form acidic liquid 22 (e.g., nitric acid (HNO₃)).

In other alternative embodiments, after the microbubble liquid M is introduced into the reaction chamber 200, the microbubble liquid M can react with the auxiliary liquid E40 in the reaction chamber 200, and the reaction chamber 200 can be heated through the auxiliary module 21, so that the first microbubble E21 and the auxiliary liquid E40 (e.g., water containing H₂O₂, but not limited thereto) are oxidized to form NO₂, and the NO₂ can dissolve in the liquid in the reaction chamber 200 to form an acidic liquid 22 (e.g., nitric acid HNO₃).

Furthermore, as shown in FIG. 1 to FIG. 4, after the acidic liquid 22 is generated, the system Z for removing harmful waste gases of the present invention can also introduce the acidic liquid 22 into the secondary reaction module 23 (e.g., a tank) via a transmission pipeline (not shown in the figures). The secondary reaction module 23 can be configured to store a special liquid (e.g., an alkaline solution, such as sodium hydroxide (NaOH)) to neutralize the acidic liquid 22, thereby converting the acidic liquid 22 into a harmless substance.

Therefore, the system Z for removing harmful waste gases of the present invention can effectively convert harmful gases (such as nitrogen oxides (NOx)) in the reaction gases generated during the production process into water-soluble substances (such as nitric acid (HNO₃)) by using the above-described technical solution and by cooperating the bubble generating device 1 with the reaction device 2, thereby facilitating subsequent filtration operations. In addition, the system Z for removing harmful waste gases of the present invention can further neutralize the water-soluble substances (such as nitric acid HNO₃) with an alkaline solution (such as sodium hydroxide (NaOH), but not limited to this) through an acid-base reaction, thereby converting them into a harmless substance.

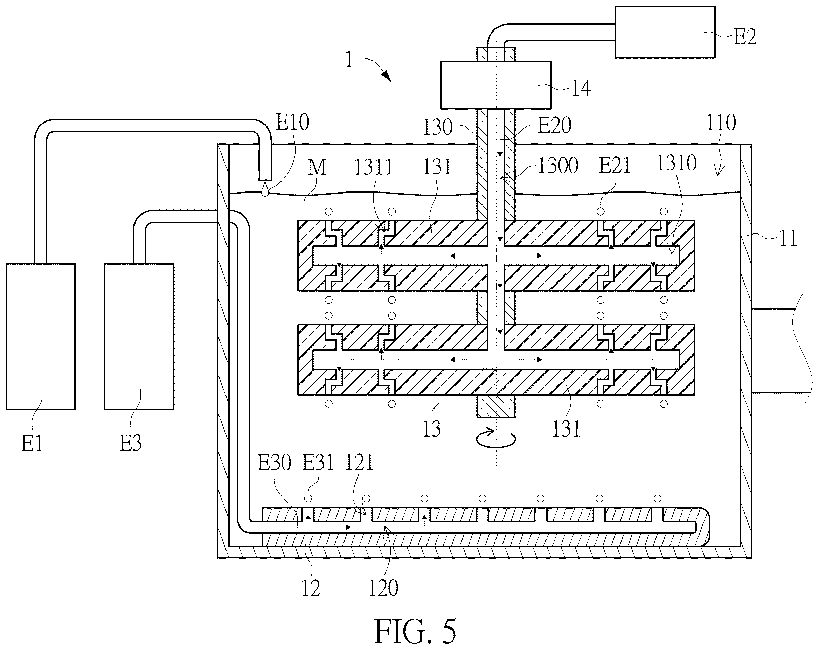

More particularly, the bubble generating device 1 of the present invention may further include a bubble supply module 12 that can be disposed in the storage chamber 110. The bubble supply module 12 can be configured to connect to a second external gas source E3 (such as a second gas supply module) and receive a second harmful waste gas E30 provided by the second external gas source E3, and to convert the second harmful waste gases E30 into a plurality of second microbubbles E31 in the microbubble liquid M, so that the second microbubbles E31 can be carried by the microbubble liquid M. For example, as shown in FIG. 1 and FIG. 5, the bubble supply module 12 may be a hollow structure and disposed in the storage chamber 110 (e.g., located in the medium liquid E10 or the microbubble liquid M). The second external gas source E3 may be any type of semiconductor process equipment, any type of industrial process equipment, gas combustion equipment, or gas supply equipment. The second harmful waste gases E30 may be a harmful gas containing nitrogen oxides (NOx) or nitric oxide (NO), but the present invention is not limited thereto. The bubble supply module 12 may have a gas delivery channel 120 and a plurality of second openings 121, and each second opening 121 can pass through the main body of the bubble supply module 12 and be connected to the gas delivery channel 120. Therefore, when the second harmful waste gases E30 are delivered to the bubble supply module 12, the bubble supply module 12 can receive the second harmful waste gases E30 through the gas delivery channel 120 and use the second openings 121 to convert the second harmful waste gases E30 into the second microbubbles E31 and supply the second microbubbles E31 to the microbubble liquid M. Then, the shear force generated by the continuous agitation of the medium liquid E10 in the storage chamber 110 by multiple stirring assemblies 131 to homogenize and refine the second microbubbles E31 in the microbubble liquid M, resulting in uniform and fine-sized second microbubbles E31.

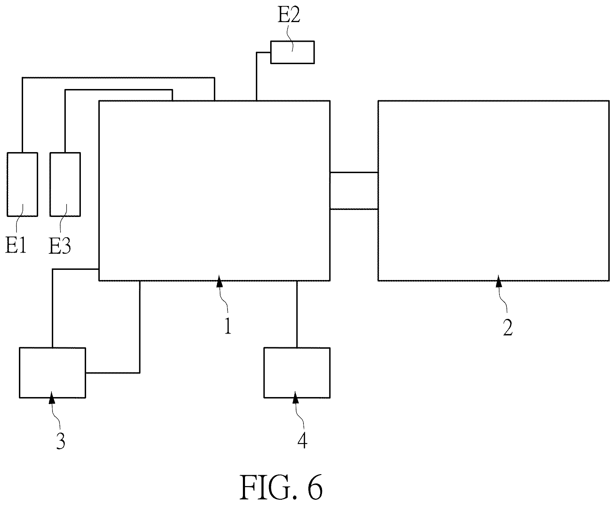

More particularly, referring to FIG. 1 to FIG. 6, the system Z for removing harmful waste gases according to the present invention may further include a circulation device 3 and a bubble inspection device 4. The circulation device 3 can be configured as a circulation motor. The circulation device 3 can be connected to the first device body 11. The circulation device 3 can be configured to receive the microbubble liquid M provided by the first device body 11 so as to increase the flow rate of the microbubble liquid M, and then introduce the accelerated microbubble liquid M into the first device body 11, thereby increasing the number of microbubbles (such as the first microbubble E21, the second microbubble E31, or a combination thereof) in the microbubble liquid M. The circulation device 3 can be configured to increase the flow rate Re of the microbubble liquid M to a value greater than 25,000, preferably 28,000. Furthermore, the circulation device 3 can be connected to the first device body 11 via multiple transmission pipes (not shown in the figures), and each transmission pipe can be a Venturi tube structure. The bubble inspection device 4 can be configured as a bubble inspection device. The bubble inspection device 4 can be connected to the first device body 11. The bubble inspection device 4 can be configured to receive and detect microbubble-related data in the medium liquid E10, including (but not limited to) measurements of gas size and concentration using techniques such as optical scattering, transmission, and bubble movement speed.

Furthermore, based on the above description and referring to FIG. 1 to FIG. 5, the present invention provides a bubble generating device 1, which may include a first device body 11, a stirring module 13, and a drive module 14. The first device body 11 can be configured to connect to a first external liquid source E1. The first device body 11 may have a storage chamber 110, which can be configured to receive a medium liquid E10 provided by the first external liquid source E1. The stirring module 13 can be suspended in the storage chamber 110. The stirring module 13 may include a main assembly 130 and a plurality of stirring assemblies 131. The stirring assemblies 131 are connected to the main assembly 130. The main assembly 130 may have a main delivery channel 1300. One end of the main assembly 130 is detachably connected to a first external gas supply source E2. Each stirring assembly 131 may have a secondary delivery channel 1310 and a plurality of first openings 1311 passing through the main body thereof. Each secondary delivery channel 1310 can be communicated with the main delivery channel 1300 and the corresponding first openings 1311. The main delivery channel 1300 can be configured to receive a first harmful waste gas E20 provided by a first external gas supply source E2 and supply the first harmful waste gas E20 to each secondary delivery channel 1310. Each secondary delivery channel 1310 can be configured to convert the first harmful waste gases E20 into the first microbubbles E21 through the first openings 1311 and supply the first microbubbles E21 to the storage chamber 110, so that the first microbubbles E21 can mix with the medium liquid E10 to form a microbubble liquid M. The drive module 14 is movably connected to the main assembly 130, and the drive module 14 can be configured to drive the main assembly 130 to rotate.

### [Second Embodiment]

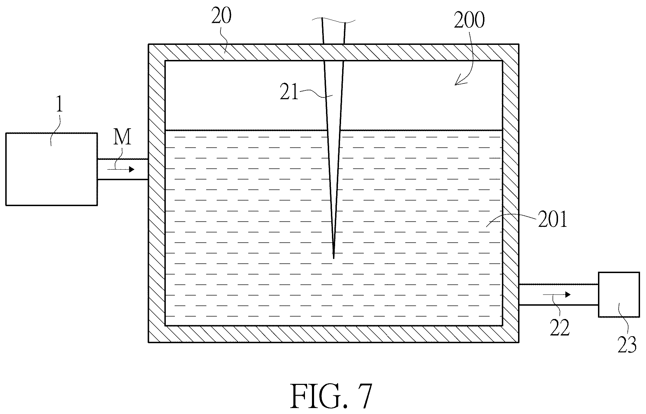

Referring to FIG. 1 to FIG. 7, the system Z for removing harmful waste gases in the second embodiment is generally similar to the system Z for removing harmful waste gases in the first embodiment, so that the arrangement or operation of the same components will not be described again here. The difference between the second embodiment and the first embodiment is that in the second embodiment, the reaction device 2 may include a second device body 20 and an auxiliary module 21. The second device body 20 can be connected to the first device body 11, and the second device body 20 may have a reaction chamber 200, which can be configured to store an auxiliary liquid. The auxiliary module 21 can be disposed in the reaction chamber 200. When the reaction chamber 200 is configured to store the microbubble liquid M and the auxiliary liquid, and the auxiliary module 21 can operate and react in the auxiliary liquid to generate multiple hydroxyl radicals, the medium liquid E10 can react with the hydroxyl radicals to generate an acidic liquid 22.

For example, referring to FIG. 1 to FIG. 7, the difference between the second embodiment and the first embodiment described above is that in the second embodiment, the auxiliary module 21 can be a device for discharging in water, such as a discharge device with at least one needle-like protrusion, and the auxiliary liquid can be electrolyzed water 201. Therefore, after the microbubble liquid M containing the first microbubble E21 and the second microbubble E31 is transported to the reaction chamber 200 of the reaction device 2, the auxiliary module 21 can perform needle-tip discharge in the auxiliary liquid to generate multiple hydroxyl radicals. At this time, the multiple hydroxyl radicals can react with the first microbubble E21 and the second microbubble E31 to form NO₂. The NO₂ then dissolves in the liquid in the reaction chamber 200 for forming an acidic liquid 22 (e.g., nitric acid HNO₃).

Furthermore, after the acidic liquid 22 is generated, the acidic liquid 22 can be further introduced into the secondary reaction module 23 via a transmission pipeline (not shown in the figures). The secondary reaction module 23 can be configured to store a special liquid (e.g., an alkaline solution, such as sodium hydroxide (NaOH)) to neutralize the acidic liquid 22, thereby converting the acidic liquid 22 into a harmless substance.

### [Third Embodiment]

Referring to FIG. 1 to FIG. 8, the system Z for removing harmful waste gases in the third embodiment may include a bubble generating device 1. The bubble generating device 1 may include a first device body 11, a stirring module 13, a drive module 14, and an irradiation module 15. The system Z for removing harmful waste gases in the third embodiment is generally similar to the system Z for removing harmful waste gases in the first embodiment described above, so that the arrangement or operation of the same components will not be described again here. The difference between the third embodiment and the first embodiment is that in the third embodiment, the bubble generating device 1 may include an irradiation module 15. The irradiation module 15 may be adjacent to the first device body 11, and the irradiation module 15 can be configured to project a special light beam toward the first device body 11.

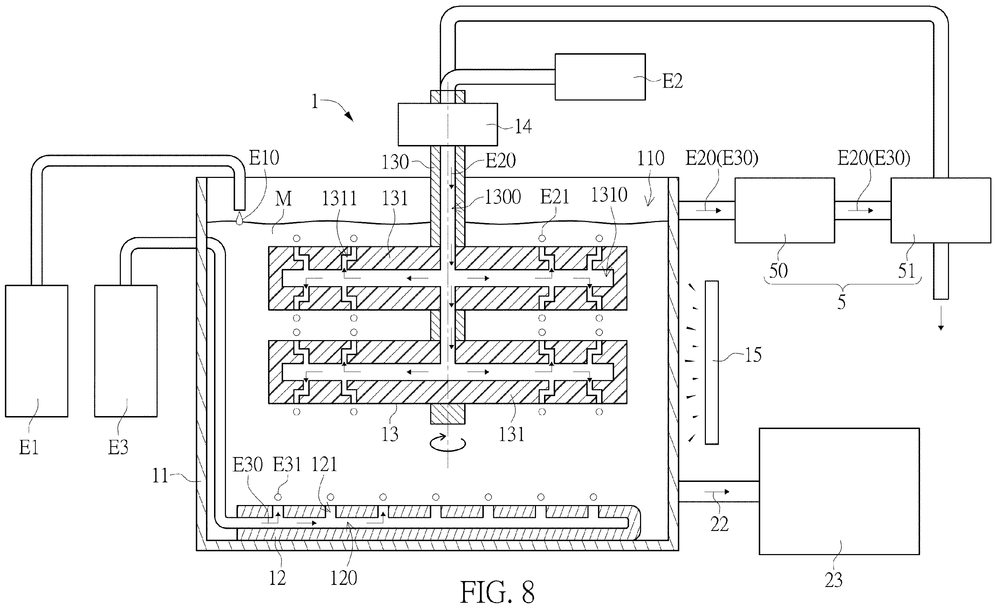

For example, as shown in FIG. 8, the first device body 11 in the third embodiment may be a hollow structure that is entirely or partially made of transparent material. The irradiation module 15 may be a lamp element. Therefore, when the system Z for removing harmful waste gases according to the present invention is operating, the bubble generating device 1 can be configured to receive the first harmful waste gases E20 supplied by the first external gas supply source E2 and the medium liquid E10 supplied by the first external liquid source E1. The first external gas supply source E2 may include a process device configured for exhausting harmful gases containing nitrogen oxides (NOx), nitric oxide (NO), or a combination thereof, and a gas supply device configured for supplying ozone (O₃) gas, and the first harmful waste gases may include NOx, NO, or a combination thereof, and O₃. That is to say, the bubble generating device 1 can be configured to receive fluids (configured as the first harmful waste gases E20) supplied by two devices (i.e., the process device for providing NOx, NO, or a combination thereof, and the gas supply device for providing O₃) respectively.

Next, the drive module 14 can drive the stirring assemblies 131 to stir the medium liquid E10 in the storage chamber 110. The first harmful waste gases E20 can be introduced into the main delivery channel 1300 of the main assembly 130. The main delivery channel 1300 can supply the first harmful waste gases E20 to each of the secondary delivery channels 1310, so that the first openings 1311 can be configured to convert the first harmful waste gases E20 into the first microbubbles E21 and supply the first microbubbles E21 to the medium liquid E10 in the storage chamber 110, thereby allowing the medium liquid E10 to carry the first microbubbles E21 so as to form the microbubble liquid M. Moreover, by continuously stirring the microbubble liquid M in the storage chamber 110 using the stirring assemblies 131, the shear force and the centrifugal force are generated to release the first microbubble E21 from the first openings 1311. Therefore, the first microbubble E21 in the microbubble liquid M can be homogenized and refined, and the size of the first microbubble E21 in the microbubble liquid M is uniform and refined.

Furthermore, the irradiation module 15 can be driven to project a special light beam (e.g., ultraviolet light) onto the first device body 11, so that the first microbubbles E21 containing O₃ can react to produce an oxidant (e.g., OH radicals). The oxidant can then react with the first microbubbles E21 containing NOx, NO, or a combination thereof to form NO₂. Next, the NO2 can dissolve in the microbubble liquid M, thereby forming an acidic liquid 22 (e.g., nitric acid (HNO₃) liquid).

Therefore, the system Z for removing harmful waste gases in the third embodiment can simultaneously or separately introduce the first harmful waste gases E20 (i.e., NOx, NO, or a combination thereof, and O₃) through the cooperation of the irradiation module 15 and the stirring module 13, so that the bubble generating device 1 has the functions of both aerating the first harmful waste gas E20 and converting the first harmful waste gas E20 into a water-soluble substance (such as a nitric acid (HNO₃) liquid). That is to say, the bubble generating device 1 has the functions of both aerating and reacting the waste gas (the functions of bubble generation and reaction gas production), thereby improving the treatment efficiency.

Furthermore, as shown in FIG. 8, after the acidic liquid 22 is generated, the system Z for removing harmful waste gases in the third embodiment can also introduce the acidic liquid 22 into the secondary reaction module 23 (e.g., a tank) via a transmission pipeline (as shown in FIG. 1 to FIG. 4). In addition, the secondary reaction module 23 can be configured to store a special liquid (e.g., an alkaline solution, such as sodium hydroxide (NaOH), but not limited thereto) to neutralize the acidic liquid 22 so as to convert the acidic liquid 22 into a harmless substance.

More particularly, some of the first microbubbles E21 in the microbubble liquid M can release the first harmful waste gases E20 into the storage chamber 110. The system Z for removing harmful waste gases may further include a monitoring device 5, which includes a decomposition module 50 and a detection module 51. The decomposition module 50 can be connected to the first device body 11 and configured to receive the first harmful waste gases E20 and reduce the O₃ content (or ozone concentration). The detection module 51 can be connected to the decomposition module 50 and the first device body 11. The detection module 51 can be configured to receive the first harmful waste gases E20. When the detection module 51 can be configured to receive the first harmful waste gas E20 and detect that the concentration of NO is greater than a preset concentration, the detection module 51 can be configured to transport the first harmful waste gases E20 to the stirring module 13.

For example, as shown in FIG. 8, the decomposition module 50 can be a catalytic exhaust gas decomposer (or catalytic converter), an ozone deionizer, or any type of ozone treatment equipment, but the present invention is not limited thereto. The detection module 51 can be a detection device used to detect the NOx and NO content in the fluid. Therefore, when the system Z for removing harmful waste gases is operating, some of the first microbubbles E21 in the microbubble liquid M may rise (float) to the surface of the microbubble liquid M without reacting and burst, thereby releasing the first harmful waste gas E20 into the storage chamber 110. Then, the first device body 11 can transport the first harmful waste gases E20 to the decomposition module 50 through a transmission pipeline (not shown in the figure). Next, the decomposition module 50 can first be used to capture and remove O₃ from the first harmful waste gas E20, thereby reducing the O₃ content of the first harmful waste gas E20 or completely filtering out O₃, and the decomposition module 50 can then transport the first harmful waste gas E20 to the detection module 51 via a transmission pipeline (not shown in the figure). Therefore, the detection module 51 can be configured to detect whether the concentration of NOx, NO, or a combination thereof of the first harmful waste gases E20 exceeds a preset concentration (which can be set according to the operator's requirements). If the detected concentration does not exceed the preset concentration, the detection module 51 can discharge the first harmful waste gases E20 into the atmosphere. If the detected concentration equals to or exceeds the preset concentration, the detection module 51 can transport the first harmful waste gases E20 to the stirring module 13, in which the stirring module 13 can convert the first harmful waste gases E20 into the first microbubbles E21 for reaction.

Furthermore, the bubble generating device 1 may further include a bubble supply module 12, which can be disposed in the storage chamber 110. The bubble supply module 12 can be configured to connect to a second external gas source E3 and receive a second harmful waste gas E30 provided by the second external gas source E3, and convert the second harmful waste gases E30 into a plurality of second microbubbles E31 and supply the second microbubbles E31 to the microbubble liquid M, so that the microbubble liquid M can carry the second microbubbles E31. For example, as shown in FIG. 8, the bubble supply module 12 of the third embodiment is substantially the same as the bubble supply module 12 of the aforementioned embodiment. The difference is that, in this embodiment, the second external gas source E3 may be a process device that can be used to discharge harmful gases containing nitrogen oxides (NOx), nitric oxide (NO), or a combination thereof, the second harmful waste gases E30 may include NOx, NO, or a combination thereof, and the first external gas source E2 may be a gas supply device that can supply ozone (O₃) gas, and the first harmful waste gases may include O₃. Therefore, when the system Z for removing harmful waste gases is operating, the bubble supply module 12 can be configured to convert the second harmful waste gases E30 into the second microbubbles E31 and supply the second microbubbles E31 to the microbubble liquid M, and the stirring module 13 can be configured to convert the first harmful waste gases E20 into the first microbubbles E21 and supply the first microbubbles E21 to the microbubble liquid M.

It is worth noting that in the above embodiments, the second external gas source E3 can also be a gas supply device for supplying ozone (O₃) gas, and the first external gas source E2 can be a process device that can be used to discharge harmful gases containing nitrogen oxides (NOx), nitric oxide (NO), or a combination thereof. Alternatively, both the second external gas source E3 and the first external gas source E2 can include various devices such as a process device (which can be used to discharge harmful gases containing nitrogen oxides, nitric oxide, or a combination thereof) and a gas supply device (which can be used to supply ozone gas). Furthermore, the decomposition module 50 can be configured to reduce the O3 content of at least one of the first harmful waste gas E20 and the second harmful waste gas E30, and the detection module 51 can be configured to detect whether the NO concentration of at least one of the first harmful waste gas E20 and the second harmful waste gas E30 is greater than a preset concentration.

However, the aforementioned details are disclosed for exemplary purposes only, and are not meant to limit the scope of the present invention.

### [Beneficial Effects of the Embodiments]

One of the beneficial effects of the present invention is that the system Z for removing harmful waste gases and the bubble generating device 1 provided by the present invention can effectively remove harmful gases from the reaction gases generated in industrial processes through the above-described technical solution.

Furthermore, through the above-described technical solution, the system Z for removing harmful waste gases of the present invention can utilize the bubble generating device 1 to generate microbubbles to increase the reaction area and reduce the reaction time, and can cooperate with the reaction device 2 to react with harmful gases, thereby effectively converting harmful gases (such as nitrogen oxides) in the reaction gases generated during semiconductor manufacturing into water-soluble substances (such as nitric acid), facilitating subsequent filtration operations. Furthermore, the system Z for removing harmful waste gases of the present invention can further neutralize the water-soluble substances (such as nitric acid) to convert them into harmless substances. Therefore, the system Z for removing harmful waste gases of the present invention can be applied to various semiconductor manufacturing equipment and can effectively convert harmful gases (such as nitrogen oxides) into harmless or treatable substances and remove them.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated.

## Claims

1. A system (S) for removing harmful waste gas, **characterized by** comprising:
a bubble generating device (1), comprising:
a first device body (11) configured to connect to a first external liquid source (E1), wherein the first device body (11) has a storage chamber (110) configured for receiving a medium liquid (E10) provided by the first external liquid source (E1);
a stirring module (13) suspended in the storage chamber (110), wherein the stirring module (13) includes a main assembly (130) and a plurality of stirring assemblies (131) connected to the main assembly (130), the main assembly (130) has a main delivery channel (1300), one end of the main assembly (130) is detachably connected to a first external gas source (E2), each stirring assembly (131) has a secondary delivery channel (1310) and a plurality of first openings (1311) passing therethrough, each secondary delivery channel (1310) is communicated with the main delivery channel (1300) and the corresponding first openings (1311), the main delivery channel (1300) is configured to receive a first harmful waste gas (E20) supplied by the first external gas source (E2) and supply the first harmful waste gas (E20) to the secondary delivery channels (1310), and each of the secondary delivery channels (1310) is configured to convert the first harmful waste gas (E20) into a plurality of first microbubbles (E21) through the first openings (1311) and supply the first microbubbles (E21) to the storage chamber (110), so that the first microbubbles (E21) mix with the medium liquid (E10) to form a microbubble liquid (M); and
a drive module (14) movably connected to the main assembly (130), wherein the drive module (14) is configured to drive the main assembly (130) to rotate; and
a reaction device (2) connected to the first device body (11), wherein the reaction device (2) has a reaction chamber (200) configured to store an auxiliary liquid (E40), and the reaction device (2) is configured to receive the microbubble liquid (M), so that the microbubble liquid (M) reacts with the auxiliary liquid (E40) to generate an acidic liquid (22).

2. The system according to claim 1, wherein the bubble generating device (1) further includes a bubble supply module (12) disposed in the storage chamber (110), the bubble supply module (12) is configured to connect to a second external gas source (E3) and receive a second harmful waste gas (E30) supplied by the second external gas source (E3), and to convert the second harmful waste gas (E30) into a plurality of second microbubbles (E31) and supply the second microbubbles (E31) to the microbubble liquid (M).

3. The system according to claim 2, wherein the bubble supply module (12) has a gas delivery channel (120) and a plurality of second openings (121), and each of the second openings (121) passes through the bubble supply module (12) and is connected to the gas delivery channel (120); and wherein the bubble supply module (12) is configured to receive the second harmful waste gas (E30) through the gas delivery channel (120) and convert the second harmful waste gas (E30) into the second microbubbles (E31) through the second openings (121).

4. The system according to claim 2 or 3, wherein each stirring assembly (131) includes a first annular element (1312), a second annular element (1313), and a plurality of fixing elements (1314), the first annular element (1312) and the second annular element (1313) each have a plurality of first openings (1311) passing through the first annular element (1312) and the second annular element (1313), one side of the first annular element (1312) is recessed inward to form a first groove portion (1312a), one side of the second annular element (1313) is recessed inward to form a second groove portion (1313a), the first groove portion (1312a) and a corresponding one of the second groove portions (1313a) cooperate with each other to form a secondary delivery channel (1310), and the fixing elements (1314) are connected to the first annular element (1312) and the second annular element (1313) to engage the first annular element (1312) and the second annular element (1313) with each other; and wherein the stirring assemblies (131) are not parallel to the main assembly (130), and a cross-section of each first opening (1311) is tortuous.

5. The system according to any of the preceding claims, wherein the reaction device (2) includes:
a second device body (20) connected to the first device body (11), wherein the second device body (20) has the reaction chamber (200), the second device body (20) is configured to be connected to a second external liquid source (E4) and to receive the auxiliary liquid (E40) provided by the second external liquid source (E4); and
an auxiliary module (21) disposed on the second device body (20);
wherein, when the reaction chamber (200) is configured to store the microbubble liquid (M) and the auxiliary liquid (E40), and the auxiliary module (21) is configured to provide a special light beam toward the reaction chamber (200) or provide a heat energy to the reaction chamber (200), the microbubble liquid (M) reacts with the auxiliary liquid (E40) to generate the acidic liquid (22).

6. A system (S) for removing harmful waste gas, **characterized by** comprising:
a bubble generating device (1), comprising:
a first device body (11) configured to connect to a first external liquid source (E1), wherein the first device body (11) has a storage chamber (110) configured for receiving a medium liquid (E10) provided by the first external liquid source (E1);
a stirring module (13) suspended in the storage chamber (110), wherein the stirring module (13) includes a main assembly (130) and a plurality of stirring assemblies (131) connected to the main assembly (130), the main assembly (130) has a main delivery channel (1300), one end of the main assembly (130) is detachably connected to a first external gas source (E2), each stirring assembly (131) has a secondary delivery channel (1310) and a plurality of first openings (1311) passing therethrough, each secondary delivery channel (1310) is communicated with the main delivery channel (1300) and the corresponding first openings (1311), the main delivery channel (1300) is configured to receive a first harmful waste gas (E20) supplied by the first external gas source (E2) and supply the first harmful waste gas (E20) to the secondary delivery channels (1310), and each of the secondary delivery channels (1310) is configured to convert the first harmful waste gas (E20) into a plurality of first microbubbles (E21) through the first openings (1311) and supply the first microbubbles (E21) to the storage chamber (110), so that the first microbubbles (E21) mix with the medium liquid (E10) to form a microbubble liquid (M); and
a drive module (14) movably connected to the main assembly (130), wherein the drive module (14) is configured to drive the main assembly (130) to rotate; and
an irradiation module (15) adjacent to the first device body (11), wherein the irradiation module (15) is configured to project a special light beam toward the first device body (11).

7. The system according to claim 6, wherein the first harmful waste gas (E20) includes nitrogen oxide and ozone; and wherein, when the special light beam is projected onto the microbubble liquid (M), the microbubble liquid (M) generates an acidic liquid (22).

8. The system according to claim 7, wherein a portion of the first microbubbles (E21) in the microbubble liquid (M) releases the first harmful waste gas (E20) into the storage chamber (110); and wherein the system further comprises a monitoring device (5) including:
a decomposition module (51) connected to the first device body (11), wherein the decomposition module (51) is configured to receive the first harmful waste gas (E20) and reduce the ozone content; and
a detection module (52) connected to the decomposition module (51) and the stirring module (13), wherein, when the detection module (52) is configured to receive the first harmful waste gas (E20) and detect that the concentration of the nitrogen oxide is greater than a preset concentration, the detection module (52) is configured to transport the first harmful waste gas (E20) to the first device body (11).

9. The system according to any of claims 6 to 8, wherein the bubble generating device (1) further includes a bubble supply module (12) disposed in the storage chamber (110), the bubble supply module (12) is configured to connect to a second external gas source (E3) and receive a second harmful waste gas (E30) supplied by the second external gas source (E3), and to convert the second harmful waste gas (E30) into a plurality of second microbubbles (E31) and supply the second microbubbles (E31) to the microbubble liquid (M).

10. The system according to claim 9, wherein the bubble supply module (12) has a gas delivery channel (120) and a plurality of second openings (121), and each of the second openings (121) passes through the bubble supply module (12) and is connected to the gas delivery channel (120); wherein the bubble supply module (12) is configured to receive the second harmful waste gas (E30) through the gas delivery channel (120) and convert the second harmful waste gas (E30) into the second microbubbles (E31) through the second openings (121); wherein the stirring assemblies (131) are not parallel to the main assembly (130), and a cross-section of each first opening (1311) is tortuous; and wherein the first harmful waste gas (E20) includes nitric oxide, ozone, or a combination thereof, and the second harmful waste gas (E30) is nitric oxide, ozone, or a combination thereof.

11. The system according to any of claims 6 to 10, wherein each stirring assembly (131) includes a first annular element (1312), a second annular element (1313), and a plurality of fixing elements (1314), the first annular element (1312) and the second annular element (1313) each have a plurality of first openings (1311) passing through the first annular element (1312) and the second annular element (1313), one side of the first annular element (1312) is recessed inward to form a first groove portion (1312a), one side of the second annular element (1313) is recessed inward to form a second groove portion (1313a), the first groove portion (1312a) and a corresponding one of the second groove portions (1313a) cooperate with each other to form a secondary delivery channel (1310), and the fixing elements (1314) are connected to the first annular element (1312) and the second annular element (1313) to engage the first annular element (1312) and the second annular element (1313) with each other.

12. A bubble generating device (1), **characterized by** comprising:
a first device body (11) configured to connect to a first external liquid source (E1), wherein the first device body (11) has a storage chamber (110) configured for receiving a medium liquid (E10) provided by the first external liquid source (E1);
a stirring module (13) suspended in the storage chamber (110), wherein the stirring module (13) includes a main assembly (130) and a plurality of stirring assemblies (131) connected to the main assembly (130), the main assembly (130) has a main delivery channel (1300), one end of the main assembly (130) is detachably connected to a first external gas source (E2), each stirring assembly (131) has a secondary delivery channel (1310) and a plurality of first openings (1311) passing therethrough, each secondary delivery channel (1310) is communicated with the main delivery channel (1300) and the corresponding first openings (1311), the main delivery channel (1300) is configured to receive a first harmful waste gas (E20) supplied by the first external gas source (E2) and supply the first harmful waste gas (E20) to the secondary delivery channels (1310), and each of the secondary delivery channels (1310) is configured to convert the first harmful waste gas (E20) into a plurality of first microbubbles (E21) through the first openings (1311) and supply the first microbubbles (E21) to the storage chamber (110), so that the first microbubbles (E21) mix with the medium liquid (E10) to form a microbubble liquid (M); and
a drive module (14) movably connected to the main assembly (130), wherein the drive module (14) is configured to drive the main assembly (130) to rotate.

13. The bubble generating device (1) according to claim 12, wherein the bubble generating device (1) further includes a bubble supply module (12) disposed in the storage chamber (110), the bubble supply module (12) is configured to connect to a second external gas source (E3) and receive a second harmful waste gas (E30) supplied by the second external gas source (E3), and to convert the second harmful waste gas (E30) into a plurality of second microbubbles (E31) and supply the second microbubbles (E31) to the microbubble liquid (M).

14. The bubble generating device (1) according to claim 13, wherein the bubble supply module (12) has a gas delivery channel (120) and a plurality of second openings (121), and each of the second openings (121) passes through the bubble supply module (12) and is connected to the gas delivery channel (120); wherein the bubble supply module (12) is configured to receive the second harmful waste gas (E30) through the gas delivery channel (120) and convert the second harmful waste gas (E30) into the second microbubbles (E31) through the second openings (121); wherein the stirring assemblies (131) are not parallel to the main assembly (130), and a cross-section of each first opening (1311) is tortuous; and wherein the first harmful waste gas (E20) includes nitric oxide, ozone, or a combination thereof, and the second harmful waste gas (E30) is nitric oxide, ozone, or a combination thereof.

15. The bubble generating device (1) according to any of claims 12 to 14, wherein each stirring assembly (131) includes a first annular element (1312), a second annular element (1313), and a plurality of fixing elements (1314), the first annular element (1312) and the second annular element (1313) each have a plurality of first openings (1311) passing through the first annular element (1312) and the second annular element (1313), one side of the first annular element (1312) is recessed inward to form a first groove portion (1312a), one side of the second annular element (1313) is recessed inward to form a second groove portion (1313a), the first groove portion (1312a) and a corresponding one of the second groove portions (1313a) cooperate with each other to form a secondary delivery channel (1310), and the fixing elements (1314) are connected to the first annular element (1312) and the second annular element (1313) to engage the first annular element (1312) and the second annular element (1313) with each other; and wherein the first harmful waste gas (E20) includes nitric oxide, ozone, or a combination thereof, and the second harmful waste gas (E30) is nitric oxide, ozone, or a combination thereof.
